# EUROPEAN PATENT SPECIFICATION

(11) **EP 1 415 524 B1**
(45) Date of publication and mention of the grant of the patent: **31.10.2007**
(21) Application number: 03256604.4
(22) Date of filing: 20.10.2003
(51) Int. Cl.: A01D 34/416, A01G 3/06, A01D 34/84

(54) **Trimmer**
Fadenschneider
Tondeuse à filament

(30) Priority: 04.11.2002 GB 0225686
(43) Date of publication of application: 06.05.2004
(73) Proprietor: Husqvarna UK Limited, County Durham, DL5 6UP (GB)
(72) Inventor: Smith, Ian Zetterstrom, Thirsk North Yorkshire, Y07 2LJ (GB)
(74) Representative: Pratt, David Martin

(56) References cited:
- EP-A- 0 005 540
- EP-A- 0 296 789
- EP-A- 0 976 313
- GB-A- 747 292
- US-E- R E21 274

## Description

This invention relates to a grass trimming device which is capable of being switched between at least two alternative configurations which are suitable for grass trimming and edge trimming respectively.

A known grass trimming device (trimmer) comprises a cutting head mounted at one end of a shaft, an operator handle being positioned at the other end of the shaft. The cutting head includes a cutter constituted by a rotatable blade or a rotatable flexible cutting line. The cutting head can be moved relative to the shaft, to position the cutter generally horizontal for grass trimming and generally vertical for edge trimming.

DE-A-3 010 092 describes a known trimmer of this type, the trimmer having a handle that can be moved from a first socket on the cutting head to a second socket on the same head, in order to shift the cutting head from a configuration in which the cutter plane is horizontal for grass trimming to a configuration in which the cutter is vertical for edge trimming. In both configurations of the device, a shaft fitted to the handle is directed upwardly towards the operator. This device suffers from the drawback that changing from one function to the other is difficult, because it is necessary to release and then remove the handle from one socket, and then replace it and lock it into position in the second socket.

EP-A-0 005 540 shows a similar device where the handle is pivotally adjustable in a plane which is perpendicular to the cutting plane. Changing the configuration of this device requires releasing a handle catch, turning the handle through 180°, releasing the cutting head, and then adjusting it to the required angle. Moreover, a relatively complex arrangement of parts is necessary to achieve the changeover. This results in considerable expense, and a risk that the components, which are not totally covered may be damaged by the ingress of dirt and debris.

EP-A-0 296 789 describes a trimmer in which the shaft includes a coupling section to which the cutting head is pivotally attached. The cutting head includes a surface defining a parting plane at which plane the coupling section is coupled to the cutting head. The parting plane, extends laterally with respect to the shaft, so that relative movement at the parting plane between the coupling section and the cutting head is about an axis which is perpendicular to the parting plane and obliquely to the shaft, so that relative movement between the coupling section and the cutting head about the parting plane positions the cutter in grass trimming and edge trimming configurations.

Each of the trimmers described above is relatively easy to operate when in the trimming configuration. However, when in the edging configuration, the user must stand at right-angles to the edge of a lawn being trimmed, and move sideways along that edge as trimming progresses. This is disadvantageous, in that it is difficult to align the cutter accurately with the edge of the lawn (owing to the eye of the user not being in alignment with the lawn edge), and this can lead to a poor edging performance. Moreover, each of the known trimmers requires a relatively complex series of operations to convert between trimming and edging configurations.

The aim of the invention is to provide a trimmer having improved edging capabilities.

The present invention provides a trimmer comprising a cutting head housing a cutter means, and a shaft for supporting the cutting head, characterised in that the cutting head is adjustably mounted with respect to the shaft by connection means enabling the cutter means to be moved between substantially vertical and substantially horizontal positions by adjusting the position of the cutting head relative to the shaft by an effective rotation of 120° in one direction or 240° in the other direction.

Preferably, the connection means is such as to permit the cutting head to be positioned with its cutter means either substantially horizontal or substantially vertical without disconnecting the cutting head and the shaft

Advantageously, the shaft has having a hand-grippable portion at a position remote from the cutting head, the arrangement being such that the line joining a point within the hand-grippable portion and the connection means is substantially parallel to plane of rotation of the cutter means when the cutter means is substantially vertical.

Preferably, the connection means is such that the cutting head is movable between positions in which its cutter means is substantially horizontal and substantially vertical in a single movement.

Preferably, the connection means is constituted by a rotatable joint. In this case, the rotatable joint is such that the cutting head is movable between positions in which its cutter means is substantially horizontal and substantially vertical about a single axis.

In a preferred embodiment, the axis of rotation of the rotatable joint lies substantially at 35.5° to the plane of rotation of the cutter means, and lies substantially at 35.5° to the horizontal when the cutting head is positioned with the cutter means either substantially horizontal or substantially vertical.

Connection means of this nature enables the cutting head to be moved between a trimming mode (in which the cutter means is substantially horizontal) and an edging mode (in which the cutter means is substantially vertical) by a simple rotation of the cutting head relative to the shaft. A particular advantage of this connection means is that the elongate shaft is generally aligned with a lawn edge in the edging mode, so that the user can carry out an edging operation when positioned behind the cutting head and moving forwards (or backwards) along the edge portion of the lawn.

Advantageously, the rotatable joint is constituted by a ball-and-socket joint. Preferably, the ball is fixed to the cutting head, and the socket is defined by a generally spherical socket portion formed at the end of the shaft remote from the hand-grippable portion.

The trimmer may further comprise a motor for driving the cutter means. Conveniently, the cutter means is rotatable, and the drive engagement between the motor and the cutter means is a rotatable drive engagement. Preferably, the motor is housed within the ball, and is an electric motor.

Preferably, a rotatable cutter line constitutes the cutter means.

In a preferred embodiment, the trimmer further comprises a wheel rotatably mounted on the cutting head. The axis of rotation of the wheel may be substantially coincident with the axis of rotation of the cutter means. Advantageously, the radius of the wheel is of the order of, but slightly less than, the effective radius of the cutter means.

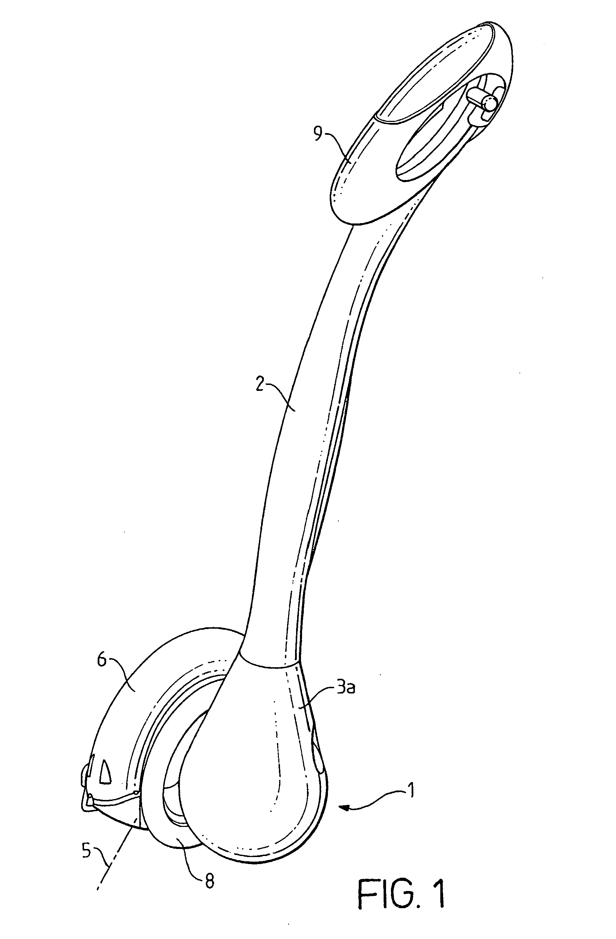

A trimmer constructed in accordance with the invention will now be described, by way of example, with reference to the drawings, in which:-
Figure 1 is perspective view of the trimmer;
Figure 2 is a side elevation of the trimmer in edging mode;
Figure 3 is a front elevation of the trimmer in edging mode;
Figure 4 is a side elevation of the trimmer in trimming mode; and
Figure 5 is a front elevation of the trimmer in trimming mode.

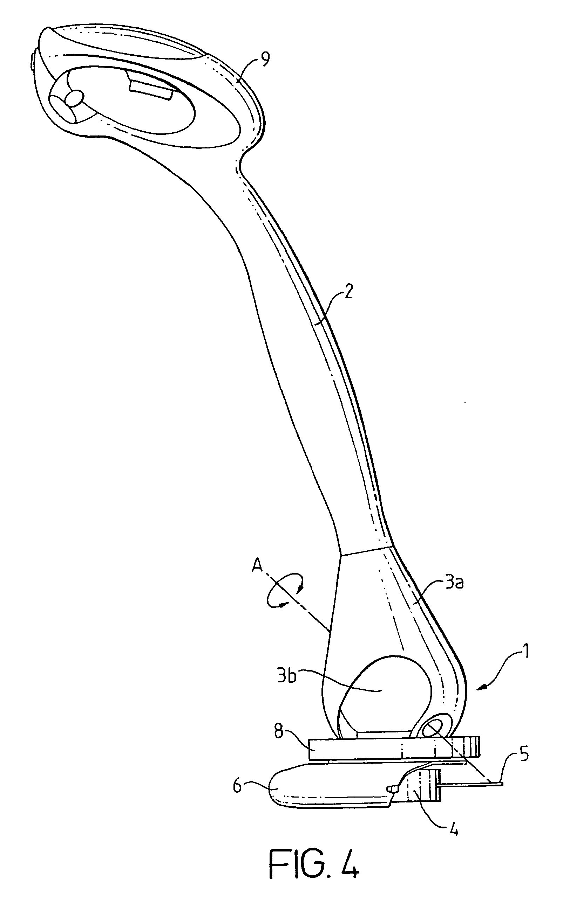

As shown in the drawings, the trimmer comprises a cutting head 1 which is connected to a shaft 2 by means of a ball-and-socket joint 3. The joint 3 is constituted by a housing 3a, which is integrally formed with the shaft 2, and a ball 3b which is fixed to the cutting head 1. The housing 3a defines a generally spherical socket which complements the shape of the ball 3b. The shaft 2 and the housing 3a are made of a plastics material such as ABS or polypropylene, and the ball 3b is made of a plastics material such as ABS or polypropylene. The cutting head 1 includes a rotatable hub 4 which houses a coiled up flexible cutter line (only the free end of portion 5 of which can be seen in the drawings). The cutter line 5 exits the hub 4 via an aperture 4a, and can be fed out (in known manner) as the cutter line wears. The axis A of rotation of the joint 3 (see Figure 4) lies at an angle of substantially 35.5° to the plane of rotation of the cutter line 5.

The cutting head 1 is also provided with a guard 6 made of a plastics material such as ABS or polypropylene. The guard 6 partially surrounds the hub 4 and the cutter line 5 in such a manner that the cutter line has an effective cutting range which extends somewhat less than 180°. The hub 4 is rotatably driven by an electric motor (only the output shaft 7 of which can be seen), the motor being housed within the ball 3b. A wheel 8 made of a plastics material such as ABS or polypropylene is mounted between the guard 6 and the housing 3a, the wheel being rotatable relative to the guard about the axis of the motor shaft 7, and having a radius that is slightly less than the effective radius of the cutter line 5. A hand grip 9 is provided at the free (upper) end of the shaft 2.

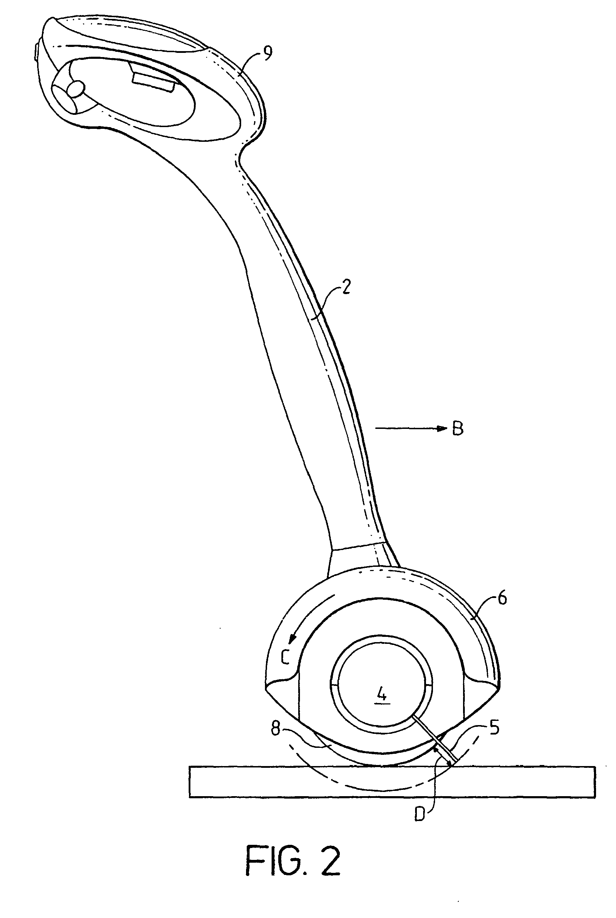

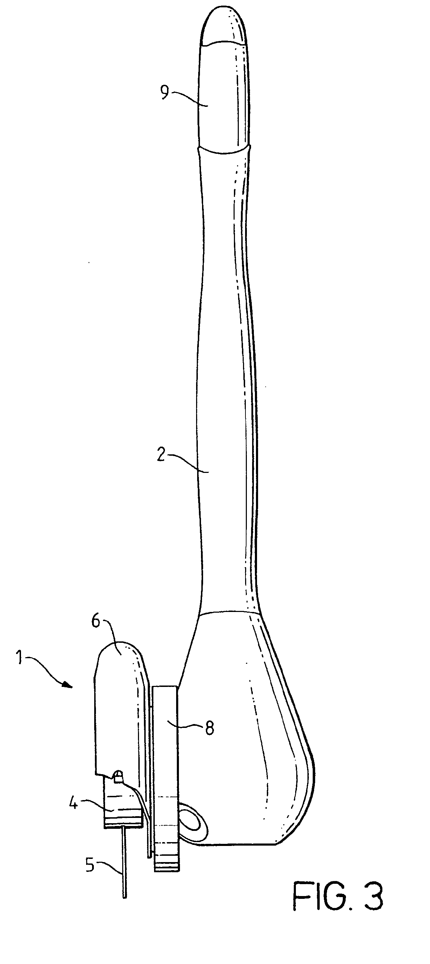

Figures 2 and 3 show the trimmer 1 in the edging position, that is to say with the cutting head 1 positioned so that the cutter line 5 is generally vertical. In this position, as shown in Figure 2, the rim of the wheel 8 can be positioned on a lawn adjacent to the edge thereof, so that the cutter line 5 is positioned for an edging operation. The trimmer can then be advanced along the edge of the lawn to carry out the edging operation. As shown in Figure 2, the distance between the effective radius of the cutter line 5 and the radius of the wheel 8 defines the depth of cut (cutting swathe) which can be effected with the trimmer in the edging position. In Figure 2, arrow B indicates the edging direction (that is to say the direction in which the trimmer is moved during edging), arrow C indicates the cutting direction (that is to say the direction of rotation of the cutter line 5), and double-headed arrow D indicates the depth of cut (the cutting swathe) of the cutter line 5.

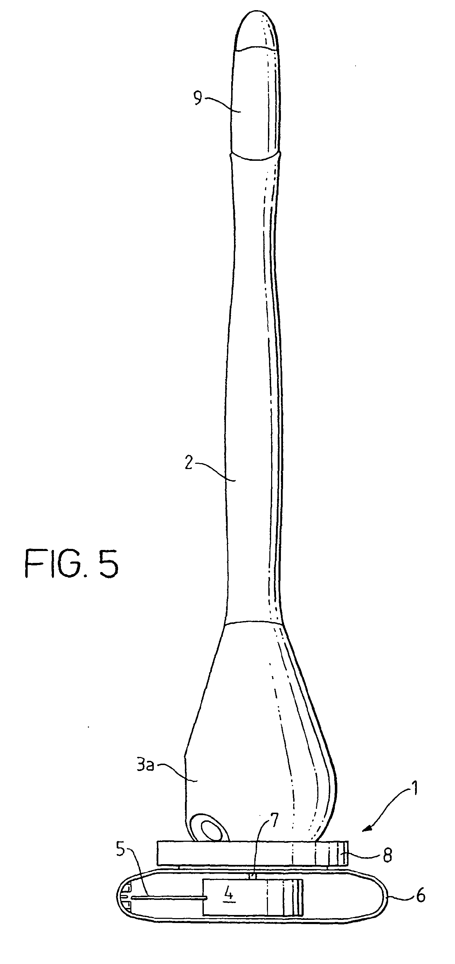

In order to change the trimmer from its edging mode to its trimming mode, it is necessary only to rotate the cutting head 1 relative to the shaft 2, through either 120° in one direction, or 240° in the other direction. Figures 4 and 5 show the trimmer with the cutting head 1 in the trimming position, that is to say with the cutter line 5 generally horizontal. In either position, the axis of rotation of the joint 3 lies at an angle of substantially 35.5° to the horizontal.

One advantage of the 120° or 240° rotational angle necessary to convert between the two modes is that, in the edging mode, the shaft 2 is generally aligned with the edge of the lawn, so that the user can carry out an edging operation when positioned behind the cutting head 1 and moving forwards (or backwards) along the edge of the lawn. This enables the user to line up the cutter line 5 with the edge of the lawn, because the user's eye can be positioned substantially in the plane of the lawn edge. This is to be contrasted with known trimmers, in which the user faces the edge of the lawn when the trimmer is in the edging position, and has to move sideways parallel to the lawn edge to carry out an edging operation. Clearly, in this position, the user cannot line up the cutter line accurately with the lawn edge. A further advantage of the trimmer described above is that, with the trimmer in the edging configuration as shown in Figure 2, the direction of rotation of the cutter line 5 is such as to throw cut grass and debris directly away from the user, that is to say at 180° to the user. This is because the user is positioned "behind" the cutting head. This is to be contrasted with known trimmer/edgers, in which the user stands at substantially 90° to the edge of the lawn (and hence to the plane of rotation of the cutter). Accordingly, there is less chance of the user of the trimmer of the present invention being hit by flying debris than with known devices.

Another advantage of the trimmer described above is that the joint about which the cutting head 1 rotates is low down, thereby reducing the difference in the height of the hand grip 9 when the trimmer is in the edging and trimming modes.

A further advantage of this trimmer is that the wheel 8 which has a relatively large diameter. The trimmer can, therefore, handle uneven lawn surfaces rather better than known wheeled trimmers which typically have a small wheel hanging off the front of the cutting head.

Yet another advantage of this trimmer is the ease with which it can be converted from the trimming mode to the edging mode and vice versa. Thus, a simple, single movement (a rotation of the housing 3a relative to the ball 3b) only is needed for such conversions, and this can be accomplished by rotating the housing with one hand whilst holding the shaft 2 or the hand grip 9 with the other hand.

It will be apparent that modifications could be made to the trimmer described above. For example, in order to facilitate two-handed operation, an additional hand grip could be provided at the front of the shaft 2 adjacent to the top thereof.

## Claims

1. A trimmer comprising a cutting head (1) housing a cutter means (5), and a shaft (2) for supporting the cutting head, **characterised in that** the cutting head is adjustably mounted with respect to the shaft by connection means (3) enabling the cutter means to be moved between substantially vertical and substantially horizontal positions by adjusting the position of the cutting head relative to the shaft by an effective rotation of 120° in one direction or 240° in the other direction.

2. A trimmer as claimed in claim 1, wherein the connection means (3) is such as to permit the cutting head (1) to be positioned with its cutter means (5) either substantially horizontal or substantially vertical without disconnecting the cutting head and the shaft (2).

3. A trimmer as claimed in claim 1 or claim 2, wherein the shaft (2) has a hand-grippable portion (9) at a position remote from the cutting head (1), the arrangement being such that the line joining a point within the hand-grippable portion and the connection means (3) is substantially parallel to plane of rotation of the cutter means when the cutter means is substantially vertical.

4. A trimmer as claimed in any one of claims 1 to 3, wherein the connection means (3) is such that the cutting head (1) is movable between positions in which its cutter means (5) is substantially horizontal and substantially vertical in a single movement.

5. A trimmer as claimed in any one of claims 1 to 4, wherein the connection means (3) is constituted by a rotatable joint.

6. A trimmer as claimed in claim 5, wherein the rotatable joint (3) is such that the cutting head (1) is movable between positions in which its cutter means (5) is substantially horizontal and substantially vertical about a single axis.

7. A trimmer as claimed in claim 5 or claim 6, wherein the axis of rotation of the rotatable joint (3) lies substantially at 35.5° to the plane of rotation of the cutter means (5), and lies substantially at 35.5° to the horizontal when the cutting head (1) is positioned with the cutter means either substantially horizontal or substantially vertical.

8. A trimmer as claimed in any one of claims 5 to 7, wherein the rotatable joint (3) is constituted by a ball-and-socket joint (3b, 3a).

9. A trimmer as claimed in claim 8, wherein the ball (3b) is fixed to the cutting head (1), and the socket (3a) is defined by a generally spherical socket portion formed at the end of the shaft (2) remote from the hand-grippable portion (9).

10. A trimmer as claimed in any one of claims 1 to 9, further comprising a motor for driving the cutter means (5).

11. A trimmer as claimed in claim 10, wherein the cutter means (5) is rotatable, and the drive engagement between the motor and the cutter means is a rotatable drive engagement.

12. A trimmer as claimed in either of claims 10 and 11 when appendant to claim 9, wherein the motor is housed within the ball (3b).

13. A trimmer as claimed in claim 11, wherein the motor is an electric motor.

14. A trimmer as claimed in any one of claims 1 to 13, wherein a rotatable cutter line (5) constitutes the cutter means.

15. A trimmer as claimed in any one of claims 1 to 14, further comprising a wheel (8) rotatably mounted on the cutting head (1).

16. A trimmer as claimed in claim 15 when appendant to claim 11, wherein the axis of rotation of the wheel (8) is substantially coincident with the axis of rotation of the cutter means (5).

17. A trimmer as claimed in claim 16, wherein the radius of the wheel (8) is of the order of, but slightly less than, the effective radius of the cutter means (5).

## Patentansprüche

1. Trimmer bzw. Schneidemaschine mit einem Schneidkopf (1), der eine Schneidvorrichtung (5) aufnimmt, und mit einem Stiel (2) zur Halterung des Schneidkopfes, **dadurch gekennzeichnet, dass** der Schneidkopf in Bezug auf den Stiel durch eine Anschlusseinrichtung (3) einstellbar angebracht ist, welche es ermöglicht, dass die Schneidvorrichtung zwischen im Wesentlichen vertikalen und im Wesentlichen horizontalen Stellungen durch Einstellung der Stellung des Schneidkopfes relativ zu dem Stiel mit einer wirksamen Schwenkung von 120° in eine Richtung oder 240° in die andere Richtung verstellbar ausgebildet ist.

2. Trimmer nach Anspruch 1, wobei die Anschlusseinrichtung (3) dem Schneidkopf (1) mit seiner Schneidvorrichtung (5) eine entweder im Wesentlichen horizontale oder im Wesentlichen vertikale Positionierung ohne Trennung des Schneidkopfes und des Stiels (2) erlaubt.

3. Trimmer nach Anspruch 1 oder 2, wobei der Stiel (2) einen von Hand greifbaren Abschnitt (9) an einer von dem Schneidkopf (1) entfernten Stellung aufweist, wobei die Anordnung so gestaltet ist, dass die Verbindungslinie von einem Punkt innerhalb des von Hand greifbaren Abschnitts zur Anschlusseinrichtung (3) im Wesentlichen parallel zur Rotationsebene der Schneidvorrichtung verläuft, wenn die Schneidvorrichtung im Wesentlichen vertikal angeordnet ist.

4. Trimmer nach einem der Ansprüche 1 bis 3, wobei die Anschlusseinrichtung (3) so ausgebildet ist, dass der Schneidkopf (1) zwischen Stellungen bewegbar ist, in welchen seine Schneidvorrichtung (5) in einer einzigen Bewegung im Wesentlichen horizontal und im Wesentlichen vertikal angeordnet ist.

5. Trimmer nach einem der Ansprüche 1 bis 4, wobei die Anschlusseinrichtung (3) aus einer drehbaren bzw. schwenkbaren Verbindung gebildet ist.

6. Trimmer nach Anspruch 5, wobei die drehbare Verbindung (3) so ausgebildet ist, dass der Schneidkopf (1) zwischen Stellungen bewegbar ist, in welchen seine Schneidvorrichtung (5) im Wesentlichen horizontal und im Wesentlichen vertikal um eine einzelne Achse angeordnet ist.

7. Trimmer nach Anspruch 5 oder 6, wobei die Rotationsachse der drehbaren Verbindung (3) im Wesentlichen um 35,5° zur Rotationsachse der Schneidvorrichtung (5) angeordnet ist, und im Wesentlichen um 35,5° zur Horizontalen angeordnet ist, wenn der Schneidkopf (1) mit der Schneidvorrichtung entweder im Wesentlichen horizontal oder im Wesentlichen vertikal positioniert ist.

8. Trimmer nach einem der Ansprüche 5 bis 7, wobei die drehbare Verbindung (3) aus einem Kugelgelenk (3b, 3a) gebildet ist.

9. Trimmer nach Anspruch 8, wobei die Kugel (3b) an dem Schneidkopf (1) befestigt ist, und die Fassung bzw. Gelenkpfanne (3a) durch einen im Allgemeinen sphärischen Fassungsabschnitt festgelegt ist, der am Ende des Stiels (2) entfernt von dem von Hand greifbaren Abschnitt (9) ausgebildet ist.

10. Trimmer nach einem der Ansprüche 1 bis 9, welcher weiterhin einen Motor zum Antrieb der Schneidvorrichtung (5) aufweist.

11. Trimmer nach Anspruch 10, wobei die Schneidvorrichtung (5) drehbar bzw. schwenkbar ist, und der Eingriff bzw. die Kopplung zwischen dem Motor und der Schneidvorrichtung als ein drehbarer Antriebseingriff bzw. eine drehbare Antriebskopplung ausgebildet ist.

12. Trimmer nach einem der Ansprüche 10 und 11 bei Abhängigkeit von Anspruch 9, wobei der Motor innerhalb der Kugel (3b) angeordnet ist.

13. Trimmer nach Anspruch 11, wobei der Motor als ein Elektromotor ausgebildet ist.

14. Trimmer nach einem der Ansprüche 1 bis 13, wobei die Schneidvorrichtung aus einem drehbaren Schneidfaden (5) gebildet ist.

15. Trimmer nach einem der Ansprüche 1 bis 14, welcher weiterhin ein an dem Schneidkopf (1) drehbar angebrachtes Rad (8) aufweist.

16. Trimmer nach Anspruch 15 bei Abhängigkeit von Anspruch 11, wobei die Drehachse des Rades (8) im Wesentlichen mit der Drehachse der Schneidvorrichtung (5) in Übereinstimmung ist.

17. Trimmer nach Anspruch 16, wobei der Radius des Rades (8) in der Größenordnung des wirksamen Radius der Schneidvorrichtung (5) liegt, aber etwas geringer als dieser ist.

## Revendications

1. Dispositif de coupe comprenant une tête de coupe (1) logeant un moyen de coupe (5), et un manche (2) pour supporter la tête de coupe, **caractérisé en ce que** la tête de coupe est montée de façon ajustable par rapport au manche par l'intermédiaire de moyens de liaison (3) permettant au moyen de coupe d'être déplacé entre des positions sensiblement verticale et sensiblement horizontale en ajustant la position de la tête de coupe par rapport au manche selon une rotation efficace de 120° dans une direction ou 240° dans l'autre direction.

2. Dispositif de coupe selon la revendication 1, dans lequel les moyens de liaison (3) sont tels qu'ils permettent à la tête de coupe (1) d'être positionnée avec son moyen de coupe (5) soit sensiblement horizontal soit sensiblement vertical sans disjoindre la tête de coupe (1) et le manche (2).

3. Dispositif de coupe selon la revendication 1 ou la revendication 2, dans lequel le manche (2) a une partie pouvant être saisie manuellement (9) au niveau d'une position éloignée de la tête de coupe (1), l'agencement étant tel que la ligne joignant un point à l'intérieur de la partie pouvant être saisie manuellement et les moyens de liaison (3) est sensiblement parallèle à un plan de rotation du moyen de coupe lorsque le moyen de coupe est sensiblement vertical.

4. Dispositif de coupe selon l'une quelconque des revendications 1 à 3, dans lequel les moyens de liaison (3) sont tels que la tête de coupe (1) est mobile entre des positions dans lesquelles son moyen de coupe (5) est sensiblement horizontal et sensiblement vertical dans un mouvement unique.

5. Dispositif de coupe selon l'une quelconque des revendications 1 à 4, dans lequel les moyens de liaison (3) sont constitués par un joint rotatif.

6. Dispositif de coupe selon la revendication 5, dans lequel le joint rotatif (3) est tel que la tête de coupe (1) est mobile entre des positions dans lesquelles son moyen de coupe (5) est sensiblement horizontal et sensiblement vertical autour d'un axe unique.

7. Dispositif de coupe selon la revendication 5 ou la revendication 6, dans lequel l'axe de rotation du joint rotatif (3) se trouve sensiblement à 35,5° par rapport au plan de rotation du moyen de coupe (5), et se trouve sensiblement à 35,5° par rapport à l'horizontal lorsque la tête de coupe (1) est positionnée avec le moyen de coupe soit sensiblement horizontal soit sensiblement vertical.

8. Dispositif de coupe selon l'une quelconque des revendications 5 à 7, dans lequel le joint rotatif (3) est constitué par un joint à rotule et coquille (3b, 3a).

9. Dispositif de coupe selon la revendication 8, dans lequel la rotule (3b) est fixée à la tête de coupe (1), et la coquille (3a) est définie par une partie de coquille généralement sphérique formée au niveau de l'extrémité du manche (2) éloignée de la partie pouvant être saisie manuellement (9).

10. Dispositif de coupe selon l'une quelconque des revendications 1 à 9, comprenant en outre un moteur pour entraîner le moyen de coupe (5).

11. Dispositif de coupe selon la revendication 10, dans lequel le moyen de coupe (5) est rotatif, et la liaison d'entraînement entre le moteur et le moyen de coupe est une liaison d'entraînement rotative.

12. Dispositif de coupe selon l'une quelconque des revendications 10 et 11 lorsqu'elle dépend de la revendication 9, dans lequel le moteur est logé à l'intérieur de la rotule (3b).

13. Dispositif de coupe selon la revendication 11, dans lequel le moteur est un moteur électrique.

14. Dispositif de coupe selon l'une quelconque des revendications 1 à 13, dans lequel une ligne de coupe rotative (5) constitue le moyen de coupe.

15. Dispositif de coupe selon l'une quelconque des revendications 1 à 14, comprenant en outre une roue (8) montée de façon rotative sur la tête de coupe (1).

16. Dispositif de coupe selon la revendication 15 lorsqu'elle dépend de la revendication 11, dans lequel l'axe de rotation de la roue (8) coïncide sensiblement avec l'axe de rotation du moyen de coupe (5).

17. Dispositif de coupe selon la revendication 16, dans lequel le rayon de la roue (8) est de l'ordre du rayon utile, mais légèrement inférieur à ce dernier, du moyen de coupe (5).
